# EUROPEAN PATENT SPECIFICATION

(11) **EP 2 707 410 B1**
(45) Date of publication and mention of the grant of the patent: **25.11.2015**
(21) Application number: 12723561.2
(22) Date of filing: 09.05.2012
(51) Int. Cl.: C08G 18/63

(54) **FINE PARTICLE, HIGH CONCENTRATION, POLYISOCYANATE POLYADDITION/POLYURETHANE-UREA POLYOLS**
HOCHKONZENTRIERTE FEINPARTIKEL-POLYISOCYANAT-POLYADDITIONS-/POLYURETHANHARNSTOFF-POLYOLE
POLYADDITION DE POLYISOCYANATE À PARTICULES FINES, DE CONCENTRATION ÉLEVÉE/POLYOLS DE POLYURÉTHANE-URÉE

(30) Priority: 09.05.2011 US 201161483814 P
(43) Date of publication of application: 19.03.2014
(73) Proprietor: Dow Global Technologies LLC, Midland, MI 48674 (US)
(72) Inventor: COOKSON, Paul, CH-8833 Samstagern (CH); BORELLA, Ricco B., CH-8003 Zuerich (CH); HOEHENER, Daniel, CH-8810 Horgen (CH); CASATI, Francois M., CH-8808 Pfaffikon (CH)
(74) Representative: Beck Greener
(86) International application number: PCT/US2012/037093
(87) International publication number: WO 2012/154831

(56) References cited:
- EP-B1- 1 419 190
- WO-A1-2004/099281
- WO-A1-2010/151431
- US-A1- 2009 281 206

## Description

### FIELD OF THE INVENTION

Embodiments of the invention relate to polyols, more specifically to polymer polyols.

### BACKGROUND OF THE INVENTION

Polyurethane foams are produced by the reaction of polyisocyanates and polyols in the presence of a blowing agent. In order to improve load-bearing and other foam properties, so-called polymer polyol products have been developed. A common type of polymer polyol is a dispersion of vinyl polymer particles in a polyol. Examples of vinyl polymer particle polyols include so-called "SAN" polyols, which are dispersions of styrene-acrylonitrile. Other common types of polymer polyols are so-called "PHD" polyols (dispersions of polyurea particles) and so-called "PIPA" (polyisocyanate polyaddition) polyols (dispersions of polyurethane and/or polyurethane-urea particles). PIPA and PHD particles may be produced by introducing the appropriate co-reactant or co-reactants into a polyol or polyol blend and reacting the co-reactant(s) with a polyisocyanate in order to polymerize the co-reactant(s) in the presence of a tin salt catalyst such as for example dimethyltin and dibutyltin catalysts. However, there is a desire to reduce the use of tin based catalysts. WO03/016373 discloses polyurethane products made using copolymer polyols. PIPA polyols formed without a seed population are disclosed. SAN polyols formed with a seed population are also disclosed. WO 2004/099281 and WO 2010/151431 disclose methods of making PIPA polyols without a seed population.

Therefore, there is a need for polymer polyols made with using less tin based catalysts, or without any tin based catalyst.

### SUMMARY OF THE INVENTION

Embodiments of the invention provide for polymer polyols made with using low amounts of tin based catalysts, or without any tin based catalyst.

In one embodiment, a method of producing a polymer polyol dispersion is provided. The method includes providing at least one reaction system, and the reaction system includes:
a) at least one polyol,
b) at least one seed population,
c) at least one catalyst
d) at least one co-reactant having an equivalent weight of up to 400 and at least one active hydrogen attached to a nitrogen or oxygen atom, and
e) at least one polyisocyanate.
The at least one seed population includes less than 5% by weight of the total weight of the at least one reaction system and includes seed particles having diameters of less than 5 µm. The at least one reaction mixture reacts to form at least one of a polyurea and polyurethane-urea particle population in the at least one polyol without the addition of any catalysts comprising tin. The resulting polymer polyol dispersion has a solids content of at least 15% of the weight of the polymer polyol dispersion.

In one embodiment, a polymer polyol dispersion is provided. The polymer polyol dispersion includes the reaction product of at least one reaction system, and the reaction system includes:
a) at least one polyol,
b) at least one seed population,
c) at least one catalyst
   at least one co-reactant having an equivalent weight of up to 400 and at least one active hydrogen attached to at a nitrogen or oxygen atom, and
e) at least one polyisocyanate.
The at least one seed population includes less than 5% by weight of the total weight of the at least one reaction system and includes seed particles having diameters of less than 5 µm. The at least one reaction mixture reacts to form at least one of a polyurea and polyurethane-urea particle population suspended in the at least one polyol without the addition of any catalysts comprising tin. The polymer polyol dispersion has a solids content of at least 15% of the weight of the polymer polyol dispersion. The polymer polyol dispersion may be stable for at least 3 months of storage.

### BRIEF DESCRIPTION OF THE DRAWINGS

FIGURE 1 is a plot depicting the particle size distribution of Example 1;
FIGURE 2 is a plot depicting the particle size distribution of Comparative Example 1;
FIGURE 3 is a plot depicting the particle size distribution of Example 2;
FIGURE 4 is a plot depicting the particle size distribution of Comparative Example 2;
FIGURE 5 is a plot depicting the particle size distribution of Example 3;
FIGURE 6 is a plot depicting the particle size distribution of Comparative Example 3;
FIGURE 7 is a plot depicting the particle size distribution of Example 4;
FIGURE 8 is a plot depicting the particle size distribution of Comparative Example 4;
FIGURE 9 is a plot depicting the particle size distribution of Example 5;
FIGURE 10 is a plot depicting the particle size distribution of Comparative Example 5;
FIGURE 11 is a plot depicting the particle size distribution of Example 6;
FIGURE 12 is a plot depicting the particle size distribution of Example 7;
FIGURE 13 is a plot depicting the particle size distribution of Example 8;
FIGURE 14 is a plot depicting the particle size distribution of Example 9;
FIGURE 15 is a plot depicting the particle size distribution of Comparative Example 6; and
FIGURE 16 is a plot depicting the particle size distribution of Comparative Example 7.

### DESCRIPTION OF EMBODIMENTS OF THE INVENTION

Embodiments of the present invention provide for a polymer polyol blend which includes PIPA and/or PHD particles which have been formed in situ in the polyol blend in the presence of seed particles. The polymer polyol blend may have a solid content of between about 15% and about 40% of the weight of the polymer polyol blend. Such high solid content may be obtained while maintaining small particles. For example, in one embodiment, at least 90% by volume of the particles have particle diameters of less than 10 µm. The in-situ formation of the PIPA and/or PHD particles of the polymer polyol blend may be formed without the addition of any catalyst comprising tin, so that the polymer polyol blend may have a very low amount of tin, if any at all, present.

The polyol blend may include any kind of polyol that is known in the art and include those described herein and any other commercially available polyol. Mixtures of one or more polyols may also be used to produce the polymer polyols according to the present invention.

Representative polyols include polyether polyols, polyester polyols, polyhydroxy-terminated acetal resins, hydroxyl-terminated amines. Alternative polyols that may be used include polyalkylene carbonate-based polyols and polyphosphate-based polyols. Preferred are polyols prepared by adding an alkylene oxide, such as ethylene oxide, propylene oxide, butylene oxide or a combination thereof, to an initiator having from 2 to 8, preferably 2 to 6 active hydrogen atoms. Catalysis for this polymerization can be either anionic or cationic, with catalysts such as KOH, CsOH, boron trifluoride, or a double metal cyanide complex (DMC) catalyst such as zinc hexacyanocobaltate or quaternary phosphazenium compound.

Examples of suitable initiator molecules are water, organic dicarboxylic acids, such as succinic acid, adipic acid, phthalic acid and terephthalic acid; and polyhydric, in particular dihydric to octohydric alcohols or dialkylene glycols.

Exemplary polyol initiators include, for example, ethanediol, 1,2- and 1,3-propanediol, diethylene glycol, dipropylene glycol, 1,4-butanediol, 1,6-hexanediol, glycerol, pentaerythritol, sorbitol, sucrose, neopentylglycol; 1,2-propylene glycol; trimethylolpropane glycerol; 1,6-hexanediol; 2,5-hexanediol; 1,4-butanediol; 1,4-cyclohexane diol; ethylene glycol; diethylene glycol; triethylene glycol; 9(1)-hydroxymethyloctadecanol, 1,4-bishydroxymethylcyclohexane; 8,8-bis(hydroxymethyl)tricyclo[5,2,1,0^{2,6}]decene; Dimerol alcohol (36 carbon diol available from Henkel Corporation); hydrogenated bisphenol; 9,9(10,10)-bishydroxymethyloctadecanol; castor oil; epoxidized seed oil; other modified seed oils containing reactive hydrogens; 1,2,6-hexanetriol; and combination thereof.

The polyols may for example be poly(propylene oxide) homopolymers, random copolymers of propylene oxide and ethylene oxide in which the poly(ethylene oxide) content is, for example, from about 1 to about 30% by weight, ethylene oxide-capped poly(propylene oxide) polymers and ethylene oxide-capped random copolymers of propylene oxide and ethylene oxide. For slabstock foam applications, such polyethers preferably contain 2-5, especially 2-4, and preferably from 2-3, mainly secondary hydroxyl groups per molecule and have an equivalent weight per hydroxyl group of from about 400 to about 3000, especially from about 800 to about 1750. For high resiliency slabstock and molded foam applications, such polyethers preferably contain 2-6, especially 2-4, mainly primary hydroxyl groups per molecule and have an equivalent weight per hydroxyl group of from about 1000 to about 3000, especially from about 1200 to about 2000. When blends of polyols are used, the nominal average functionality (number of hydroxyl groups per molecule) will be preferably in the ranges specified above. For viscoelastic foams shorter chain polyols with hydroxyl numbers above 150 are also used. For the production of semi-rigid foams, it is preferred to use a trifunctional polyol with a hydroxyl number of 30 to 80.

The polyether polyols may contain low terminal unsaturation (for example, less that 0.02 meq/g or less than 0.01 meq/g), such as those made using so-called double metal cyanide (DMC) catalysts or may have an unsaturation higher than 0.02 meq/g, provided it is below 0.1 meq/g. Polyester polyols typically contain about 2 hydroxyl groups per molecule and have an equivalent weight per hydroxyl group of about 400-1500.

The polyol blend is seeded with a small amount of suspended particles having a maximum particle diameter of less than 5 µm to help with the formation of additional particles through the reaction between the co-reactant and the polyisocyanate. The particles may be either isocyanate non-reactive or isocyanate reactive particles. The polyol blend may include between about 0.02 weight % and about 5 weight % of the seed particles based on the total weight of polyol blend. All individual values and subranges between about 0.02 and about 5.0 % are included herein and disclosed herein; for example, the solid content may be from a lower limit of 0.02, 0.05, 0.1, 0.15, 0.2, 0.25, 0.3, 0.35, 0.4, 0.45, 0.5, 0.6, 0.67, 0.7, 0.75, 0.8, 0.85, 0.9, 1, 1.5, 2, 2.5, 3, or 4 to an upper limit of 0.25, 0.3, 0.35, 0.4, 0.45, 0.5, 0.6, 0.67, 0.7, 0.75, 0.8, 0.85, 0.9, 0.95, 1.5, 2, 2.5, 3, 4, or 5 % of the weight of the polyol blend.

Isocyanate non-reactive seeding particles do not exhibit a chemical reaction when combined with an isocyanate. Examples of isocyanate non-reactive seeding particles include Polyethylene, Polypropylene, PVC, vinyl polymer particles and inorganic minerals such as functional silanes, fumed silica, calcium carbonate, titanium dioxide, aluminium trihydrate or barium sulfate. Vinyl polymer particles include particles of acrylonitrile, polystyrene, methacrylonitrile, methyl methacrylate, and styrene-acrylonitrile.

To produce a dispersion of vinyl polymer particles, one or more ethylenically unsaturated monomers and at least one stabilizer, both as described more fully below, are dispersed in a polyol, such as the polyols described above. In general, the polymerization is conducted by forming an agitated mixture of the monomer in the polyol, and subjecting the mixture to conditions sufficient to polymerize the monomer to form dispersed polymer particles. Conditions suitable for conducting such polymerizations are well known and described, for example, in WO 2006/065345 and WO 2008/005708.

Suitable ethylenically unsaturated monomers are those which are polymerizable at a temperature at which the continuous phase does not significantly degrade (such as at temperature of below 150 °C, especially below 130 °C), and which have low solubility in the polyol blend when polymerized. Examples of suitable monomers include aliphatic conjugated dienes such as butadiene; monovinylidene aromatics such as styrene, α-methyl styrene, vinyl naphthalene and other inertly substituted styrenes; α,β-ethylenically unsaturated carboxylic acids and esters such as acrylic acid, methacrylic acid, methyl acrylate, methyl methacrylate, 2-hydroxyethyl acrylate and 2-hydroxyethyl methacrylate; α,β-ethylenically unsaturated nitriles such as acrylonitrile; acrylamide; vinyl esters such as vinyl acetate; vinyl ethers; vinyl ketones; vinyl and vinylidene halides; and the like. Of these, the monovinyl aromatics and α,β-unsaturated nitriles are preferred. Styrene and acrylonitrile are preferred monomers. Mixtures of styrene and acrylonitrile (SAN) may be preferred, especially mixtures in which styrene constitutes from about 25 to 95%, especially from about 50 to 75%, of the weight of the monomer mixture.

One class of stabilizers for producing vinyl polymer particles includes macromers that are compatible with the polyol blend (i.e., form a single-phase mixture with the polyol blend at the relative proportions that are present) and which contain polymerizable ethylenic unsaturation. The macromers may include a polyether portion, which is typically a polymer of propylene oxide and/or ethylene oxide. The polymer is capped with a difunctional capping agent that has a hydroxyl-reactive group and ethylenic unsaturation. Examples of such capping agents include isocyanates, carboxylic acids, carboxylic acid halides, carboxylic acid anhydrides and epoxies having ethylenic unsaturation, and hydroxyl-reactive silanes such as vinyl trimethoxysilane. The macromer may have a number average molecular weight of about 2000-50,000, preferably about 8,000 to about 15,000. The macromer may contain an average of from about 1 to about 7 or more hydroxyl groups/molecule. A macromer of particular interest has a number average molecular weight of about 8,000 to 15,000 and an average of no more than 1.0 hydroxyl group/molecule. Another macromer of particular interest has a number average molecular weight of about 8,000 to 15,000 and an average of 3-7 hydroxyl groups/molecule.

Another suitable class of stabilizers includes polyethers having a molecular weight of about 5,000 to about 50,000, especially about 8,000 to about 15,000, which do not contain added ethylenically polymerizable unsaturation. These stabilizers are conveniently prepared by reacting a lower molecular weight polyether polyol with a coupling agent, such as a polyioscyanate, certain silanes having two or more hydroxyl-reactive groups (such as alkoxyl groups), polyepoxides, polycarboxylic acids or the corresponding acid halides and anhydrides, and the like.

The vinyl polymer particles may be prepared by combining the monomer(s), stabilizer and polyol blend with agitation to form a mixture, and subjecting the mixture to polymerization conditions. It is possible to add all components to the reaction vessel at the start of the reaction, and it is possible to add monomers and stabilizer to the reaction vessel continuously or in stages during the reaction. When a macromer-type stabilizer is used, a small amount of the monomers may be polymerized before beginning the main monomer feed. The stabilizer may be added in a rate roughly proportional to the rate of growth of the surface area of the dispersed particles.

The polymerization may be conducted in the presence of a free radical initiator. The amount of the free radical initiator is selected to provide a commercially reasonable reaction rate while controlling exotherms. A typical amount of free radical initiator is from about 0.1 to about 5, preferably about 0.2 to about 2 and more preferably from about 0.25 to about 1% by weight, based on monomers. The free radical initator may be all added at the start of the reaction, or it may be added continuously or in stages during the reaction (particularly when the monomer is so added). Examples of suitable free radical initiators include peroxyesters, peroxides, persulfates, perborates, percarbonates, azo compounds and the like. Specific examples of suitable free radical initiators include hydrogen peroxide, t-butyl peroctoate, di(t-butyl) peroxide, lauroyl peroxide, cumene hydroperoxide, t-butyl hydroperoxide, 2,2'-azobis [2,4-dimethyl]pentanenitrile, 2-(t-butylazo)-2-methylbutane nitrile, 2-(t-butylazo)-2-4,dimethylpentanenitrile, azobis (isobutyronitrile), azobis(methylbutyronitrile) (AMBN), tert-amyl peroxy 2-ethyl hexanoate and mixtures of any two or more thereof.

The polymerization to form vinyl polymer particles may be conducted in the presence of a chain transfer agent, as the use of these materials in some cases improves the stability and filterability of the polymer polyol product. Suitable such chain transfer agents include mercaptans such as tertiary dodecyl mercaptan, α-toluenethiol, 1-tetradecanethiol, 2-octanethiol, 1-heptanethio, 1-octanethiol, 2-naphthalenethiol, 1-naphthalenethiol, 1-hexanethiol, ethanethio, and 1-dodecanethiol. Other suitable chain transfer agents include benzyl sulfide, iodoform, iodine, and the like. Suitable amounts of chain transfer agent are from about 0.1 to about 5, especially from about 0.25 to about 2.5 and preferably from about 0.5 to about 1%, based on the weight of the monomers.

The inorganic seeding particles include for example aluminum trihydrate, titanium dioxide, fumed silica, calcium carbonate, or barium sulfate. Preferably the particle diameters of the inorganic minerals are below 1 µm. Fumed silica is a synthetic amorphous SiO₂ produced by burning SiCl₄ in an O₂-H₂ flame. Examples include AEROSIL available from Evonik Industries.

Isocyanate reactive seeding particles exhibit a chemical reaction when combined with an isocyanate. Isocyanate reactive seeding particles include polyurethane and/or polyurethane-urea particles (PIPA) or urea particles (PHD). It is known in the art that PHD particles are less readily reactive with isocyanates than PIPA particles. To produce a dispersion of polyurethane and/or polyurethane-urea particles (PIPA) or urea particles (PHD) for the seeded polyol blend, PIPA and/or PHD forming co-reactant is dissolved or dispersed in a polyol, such as the polyols described above.

If a PHD seed is desired, the PHD forming co-reactants may include amines, such as ammonia, anilines and substituted anilines, and fatty amines. The PHD forming co-reactants may also include diamines, such as ethylenediamine, 1,6-hexamethylenediamine, alkonolamines, and hydrazine.

If a PIPA seed is desired, the PIPA forming co-reactants may include include diols, triols, tetrols, or higher functionality alcohols, such as glycol, glycerol, quadrol, polyglycerine; and alkanolamines, such as monoethanolamine, diethanolamine, triethanolamine, triisopropanolamine, 2-(2-aminoethoxyethanol), hydroxyethylpiperazine, monoisopropanolamine, diisopropanolamine and mixtures thereof. Other alkanolamines which may be considered include N-methylethanolamine, phenylethanolamine, and glycol amine. It is also possible to provide a mixture of PHD and PIPA forming co-reactants to form hybrid PHD-PIPA particles.

The composition of the PIPA and/or PHD particles may not only depend on the structure of the co-reactant; the composition of the polyol blend may also affect the particle compositions. Polyols such as glycerol, and amines with only alcohols, such as triethanolamine, incorporate polyurethane into the particles; aminoalcohols, such as triethanolamine, incorporate polyurethane-urea into the particles; primary or secondary amines, such as hydrazine or Ethylenediamine, incoproprate polyurea into the particles. Another co-reactant can be water which forms additionally polybiuret's and polyallophanate's. Typically, the isocyanate reactive particles are obtained by under-indexing, i.e. by using an amount of polyisocyanate lower than the theoretical one needed to fully react the co-reactant. Additionally the polymer itself can contain reactive groups, such as for instance polyureas, although these are not as reactive as hydroxyls or secondary amine moieties. In addition to the reaction of co-reactant with polyisocyanate, it is recognized that the carrier polyols does react to some extent with the polyisocyanate, hence all of these isocyanate reactive seeds contain polyurethane polymer moieties.

The at least one PHD and/or PIPA polymer forming co-reactants for seeding particles are added to the polyol in a concentration of between about 2 wt.% and about 20 wt.%, preferably between about 5 wt.% and about 15 wt.%. Lower solid contents (such as less than 16%) may be preferable in order to get smaller particles (below 5 µm) which may be more effective seeds.

Alternatively the isocyanate reactive seeding particle may be a multifunctional compound which is not soluble in the polyol, such as polyureas, or polyalcohols, such as sucrose, or amines and polyamines, such as imidazole, or cyclic compounds such as benzoguanamine or Tris(hydroxyethyl)isocyanurate. These reactive seeds are dispersed in the carrier polyol prior to producing the PHD or PIPA polyol,

Additionally, catalysts are combined with the polyol. Catalytic quantities of organometallics may be used. Organometallic compounds useful as catalysts include those of bismuth, lead, tin, titanium, iron, antimony, uranium, cadmium, cobalt, thorium, aluminum, mercury, zinc, nickel, cerium, molybdenum, vanadium, copper, manganese, zirconium, chromium, etc. Some examples of these metal catalysts include bismuth nitrate, bismuth neodecanoate, lead 2-ethylhexoate, lead benzoate, lead oleate, dibutyltin dilaurate, tributyltin, butyltin trichloride, dimethyltin stannic chloride, stannous octoate, stannous oleate, dibutyltin di-(2-ethylhexoate), ferric chloride, antimony trichloride, antimony glycolate, tin glycolates, iron acetyl acetonate etc. The catalyst is used to accelerate the reaction of isocyanate with the co-reactant, such as the hydroxyl or secondary or primary amine groups of the alkanolamines or the primary or secondary amines groups of the amine based co-reactant. Preferably, catalysts not comprising tin are used.

Embodiments also include using tertiary amine catalysts such as DABCO 33 LV (a 1,4-diazabicyclo[2.2.2]octane or triethylenediamine) or POLYCAT 77 (a bis-(dimethylaminopropyl)methylamine) as co-catalyst in addition to the metal salt catalyst. Embodiments also include metal salt catalysts based on a fatty acid, such as KOSMOS EF (Stannous ricinoleate); KOSMOS 54 (Zinc ricinoleate), Zinc octoate, or DABCO MB20 (Bismuth neodecanoate). In some embodiments, a combination of tertiary amine catalysts and metal salt catalysts based on a fatty acid is used.

In embodiments of the invention, the metal salt catalyst is pre-blended with the co-reactant (the amine and/or amino-alcohol) used to produce the PHD or PIPA seed particles, and the amine catalyst is pre-blended with the carrier polyol. This combination of the two types of catalysts may improves the control of both the reaction of the polyisocyanate with the co-reactant, to get the particles, and the polyisocyanate with the carrier polyol, in order to get particle stabilization. By combining the metal catalyst and the co-reactant, it is found that the polymerization reaction is favored. On the another hand, a too strong reaction of the polyisocyanate with the carrier polyol will increase the final product viscosity, while reducing the PHD or PIPA polymerization process, as more polyisocyanate would be consumed in the reaction with the carrier polyol, hence these two competing reactions have to be balanced to get a stable PHD or PIPA polyol at low viscosity.

Under mixing, at least one polyisocyanate is added to the polyol mixing may be produced in stirred reactors or by using static mixers in series, as is know in the art, or more preferably continuously by using a high pressure mixing head, such as those used in polyurethane foaming machines, with multiple streams for polyols, additives, co-reactants, and polyisocyanates. Isocyanates which may be used in the present invention include aliphatic, cycloaliphatic, arylaliphatic and aromatic isocyanates.

Examples of suitable aromatic polyisocyanates include the 4,4'-, 2,4' and 2,2'-isomers of diphenylmethane diisocyante (MDI), blends thereof and polymeric and monomeric MDI blends, toluene-2,4- and 2,6-diisocyanates (TDI), m- and p-phenylenediisocyanate, chlorophenylene-2,4-diisocyanate, diphenylene-4,4'-diisocyanate, 4,4'-diisocyanate-3,3'-dimehtyldiphenyl, 3-methyldiphenyl-methane-4,4'-diisocyanate and diphenyletherdiisocyanate and 2,4,6-triisocyanatotoluene and 2,4,4'-triisocyanatodiphenylether.

Mixtures of polyisocyanates may be used, such as the commercially available mixtures of 2,4- and 2,6-isomers of toluene diisocyantes. A crude polyisocyanate may also be used in the practice of this invention, such as crude toluene diisocyanate obtained by the phosgenation of a mixture of toluene diamine or the crude diphenylmethane diisocyanate obtained by the phosgenation of crude methylene diphenylamine. TDI/MDI blends may also be used.

Examples of aliphatic polyisocyanates include ethylene diisocyanate, 1,6-hexamethylene diisocyanate, isophorone diisocyanate, cyclohexane 1,4-diisocyanate, 4,4'-dicyclohexylmethane diisocyanate, saturated analogues of the above mentioned aromatic isocyanates and mixtures thereof.

The at least one polyisocyanate is added to the polyol for an isocyanate index of between about 30 and about 150, such as between about 50 and about 120, between about 60 and about 110, or between 60 and 90. The isocyante index may be kept below 100 to keep PIPA and/or PHD forming co-reactant present in the polymer seeds. The isocyanate index is the ratio of isocyanate-groups over isocyanate-reactive hydrogen atoms present in a formulation. Thus, the isocyanate index expresses the percentage of isocyanate actually used in a formulation with respect to the amount of isocyanate theoretically required for reacting with the amount of isocyanate-reactive hydrogen used in a formulation.

The at least one PHD and/or PIPA polymer forming co-reactants and polyiisocyanate may be successfully reacted without the application of external heat and atmospheric pressure, although higher temperatures and pressures may also be acceptable. For example, the reaction temperature could range between about 20 °C and about 120 °C., and the pressure may range from atmospheric to about 100 psi.

The either isocyanate non-reactive or isocyanate reactive seed is combined with the polyol blend described above to form a seeded polyol blend. The seed may be combined with the polyol blend such that the polyol blend has a solid content of between about 0.02 and about 5.0% of the weight of the seeded polyol blend. All individual values and subranges between about 0.02 and about 5.0 % are included herein and disclosed herein; for example, the solid content may be from a lower limit of 0.02, 0.05, 0.1, 0.15, 0.2, 0.25, 0.3, 0.35, 0.4, 0.45, 0.5,0.6, 0.67, 0.7, 0.75, 0.8, 0.85, 0.9, 1, 1.5, 2, 2.5, 3, or 4 to an upper limit of 0.25, 0.3, 0.35, 0.4, 0.45, 0.5, 0.6, 0.67, 0.7, 0.75, 0.8, 0.85, 0.9, 0.95, 1.5, 2, 2.5, 3, 4, or 5% of the weight of the seeded polyol blend.

The seeded polyol blend may be combined with PHD forming co-reactants and/or PIPA forming co-reactants. PHD and/or PIPA polymer polyol dispersions may be produced in a very similar manner as the PHD and/or PIPA seed particles are made, using similar reactants and conditions, such as the same polyols, co-reactants, catalysts, and polyisocyanates. However, the formation of the PHD and/or PIPA polymer polyol dispersions is done without the addition of any catalyst comprising tin. Thus, if no catalyst comprising tin is used in producing the seed described above, the resulting polymer polyol dispersion is fully devoid of tin, *i.e.* no detectable tin is present in the polymer polyol dispersion. However, if a catalyst comprising tin is used in producing the seed described above, there will be a small amount of tin in the polymer polyol dispersion. The amounts of tin in a such a system is minimal, due to the dilution of the seed containing polyol, resulting in a polymer polyol dispersion substantially devoid of tin. By substantially devoid of tin is meant a final tin amount of between 0.02 ppm and about 5 ppm, more preferably below 5 ppm. Embodiments also include using the tertiary amine catalysts as well as the metal salt catalysts based on a fatty acid. In some embodiments, a combination of tertiary amine catalysts and metal salt catalysts based on a fatty acid is used. Embodiments also include the use of an amine catalyst, or an autocatalytic polyol, made by alkoxylating a polyamine initiator, without the presence of a metal salt catalyst. However, this may result in a high viscosity of the resulting polymer polyol.

The co-reactants to produce the PHD or the PIPA polyols may be materials having an equivalent weight of up to 400 and a plurality of active hydrogen atoms attached to oxygen or nitrogen atoms. They can be fully soluble in the carrier polyol or they can be only partially soluble. For partially soluble co-reactants, the dispersions may be made shortly before the PHD or the PIPA polyols are produced, such as less than one day prior to the PHD or PIPA production. Alternatively the co-reactant is added in a separate stream at the mixing chamber.

If a PHD polyol is desired, the PHD forming co-reactants may include amines, such as ammonia, anilines and substituted anilines, and fatty amines. The PHD forming co-reactants may also include diamines, such as ethylenediamine, 1,6-hexamethylenediamine, alkonolamines, and hydrazine.

If a PIPA polyol is desired, the PIPA forming co-reactants may include diols triols, tetrols, or higher functionality alcohols, such as glycol, glycerol, quadrol, polyglycerine; and alkanolamines, such as monoethanolamine, diethanolamine, triethanolamine, triisopropanolamine, 2-(2-aminoethoxyethanol), hydroxyethylpiperazine, monoisopropanolamine, diisopropanolamine and mixtures thereof. Other alkanolamines which may be considered include N-methylethanolamine, phenylethanolamine, and glycol amine. It is also possible to provide a mixture of PHD and PIPA forming co-reactants to form hybrid PHD-PIPA particles.

The composition of the PIPA and/or PHD particles may not only depend on the structure of the co-reactant; the composition of the polyol blend may also affect the particle compositions. Polyols such as glycerol, and amines with only alcohols, such as triethanolamine, incorporate polyurethane into the particles; aminoalcohols, such as triethanolamine, incorporate polyurethane-urea into the particles; primary or secondary amines, such as hydrazine or Ethylenediamine, incorporate polyurea into the particles. The co-reactant may alterantively be water which forms polybiurets and polyallophanates.

The polymer polyol dispersion may be formed in either in a bulk reaction vessel or in a continuous process. For a bulk reaction, the seeds, polyol blends, co-reactants, and catalysts are first blended together followed by the addition of polyisocyanates under vigorous stirring conditions, or the catalyst can be added last. A continuous process may be performed using a high pressure mixing-head, such as those designed to produce polyurethane foam. Multiple streams, such as a polyol stream, seed and polyol stream, catalyst and co-reactant stream, and polyisocyanate stream may be combined in the mixing-head.

Embodiments include preblending a fatty acid metal salt catalyst (such as KOSMOS 54 (a zinc ricinoleate catalyst), Dabco MB 20 (Bismuth Neodecanoate), or Zinc Octoate) and a tertiary amine catalyst (such as DABCO 33 LV or Polycat 77), and the co-reactant, before the addition of polyisocyanate. Another possibility is to use an amine initiated polyol as part of the carrier polyol such as those described in WO 03/016373.

In embodiments of the invention, the metal salt catalyst is pre-blended with the co-reactant (the amine and/or amino-alcohol) used to produce the PHD or PIPA particles, and the amine catalyst is pre-blended with the polyol blend. By combining the metal catalyst and the co-reactant, it is found that the particle polymerization reaction is favored over the reaction of the polyisocyanate with the polyol blend. Thus, in a continuous process, the streams may include a polyol and amine catalyst stream, a seed and polyol stream, co-reactant and metal salt catalyst stream, and a polyisocyanate stream. In other embodiments, the metal salt catalyst may be a fatty acid metal salt catalyst as described above and the amine catalyst a tertiary amine catalyst as described above.

The resulting PIPA and/or PHD, polymer polyol dispersions may have a solids content within the range between about 15 wt.% and about 40 wt.%. All individual values and subranges between about 15 wt.% and about 40 wt.% are included herein and disclosed herein; for example, the solid content may be from a lower limit of 15, 16, 17, 18, 19, 20, 25,30, or 35 to an upper limit of 18, 20, 25, 30, 35, or 40 % of the weight of the polymer polyol dispersions. It is appreciated that these solids levels are calculated based on the addition of concentrations of seeds, co-reactants and polyisocyanates in the total recipe. Because some of the polymer formed may be soluble in the carrier polyol, in what is known as the serum phase, the measurable level of solid particles may be lower than the theoretical amount by up to 30%, preferably by less than 20%, or preferably by less than 10%.

The PIPA or PHD particles may have a glass transition temperature of at least 40°C, and preferably higher than 50 °C.

The PHD or PIPA particle size and particle size distribution may be measured with using any method known in the art. For example, the PHD or PIPA particle size and particle size distribution may be measured with a Beckman Coulter LS230 particle size analyzer with small volume module. The sample of PHD and/or PIPA polyol is first diluted in isopropanol before being measured by light distribution of a laser beam. The bigger the size of the particles, the larger,the distribution of the laser light. Several measurements take place during a run to provide a diagram showing volume% with particle size. The dilution with isopropanol is adjusted depending on solids content to optimize the instrument reading. Usually 20 to 30 ml of IPA are used for 0.5 grams of PHD and/or PIPA polyol.

The PHD and/or PIPA polymer polyol dispersion solids may have average particle such that at least 90% by volume of the particles have particle diameters of less than 10 µm as measured in accordance to the Beckman Coulter LS230 analysis. Embodiments encompass at least 99% by volume of the particles have particle diameters of less than 10 µm. Embodiments also encompass at least 90% by volume of the particles have particle diameters of less than 5 µm. Embodiments also encompass at least 99% by volume of the particles have particle diameters of less than 5 µm.

For a PIPA and/or PHD solid contents of 20%, the viscosity of the resulting polymer polyol dispersion may be less than 8,000 cps, is preferably less than 7,000 cps, and preferably less than 6,000 cps, measured at 25 °C in accordance to the ISO 3219 method. Another method is the use of cone and plate, with 2 minutes shear ramping program to check the effect of shearing on the particles in suspension in the polyol.

The polymer polyol dispersion prepared from the above ingredients may then be incorporated into a formulation which results in a polyurethane product. The polymer polyol dispersionss embodied herein may be used in conjunction with a polyisocyanate such as those mentioned above or may be combined with additional polyols well known in the art, and reacted with a polyisocyanate to form a resulting polyurethane foam product.

In general, the polyurethane foams are prepared by mixing an isocyanate, such as the isocyanates listed above, or combinations thereof, and the polymer polyol in the presence of a blowing agent, catalyst(s) and other optional ingredients as desired. Additional polyols and/or polymer polyols may also be added to the polymer polyol blend before the polymer polyol composition is reacted with the polyisocyanate. The conditions for the reaction are such that the polyisocyanate and polyol composition react to form a polyurethane and/or polyurea polymer while the blowing agent generates a gas that expands the reacting mixture.

The polyol blend may have a total solids content (including seed, PIPA and/or PHD solids) of between about 5 wt.% and about 50 wt.% or more, based on the total mass of the blend. All individual values and subranges between about 5 wt.% and about 50 wt.% are included herein and disclosed herein; for example, the solid content may be from a lower limit of 5, 8, 10, 15,20, 25, or 30 wt.% to an upper limit of 20, 25, 30, 35, or 40 wt.% of the weight of the blend.In one embodiment the content is between about 8 and 40 wt.%. Additionally fillers, such as mineral fillers, flame retarding agents such as melamine, or recycled foam powder can be incorporated in the polyol blend at levels between 1 and 50% of the polyol blend, or between 2 and 10% of the polyol blend.

The blend may also include one or more catalysts for the reaction of the polyol (and water, if present) with the polyisocyanate. Any suitable urethane catalyst may be used, including tertiary amine compounds, amines with isocyanate reactive groups and organometallic compounds. Exemplary tertiary amine compounds include triethylenediamine, N-methylmorpholine, N,N-dimethylcyclohexylamine, pentamethyldiethylenetriamine, tetramethylethylenediamine, bis (dimethylaminoethyl)ether, 1-methyl-4-dimethylaminoethyl-piperazine, 3-methoxy-N-dimethylpropylamine, N-ethylmorpholine, dimethylethanolamine, N-cocomorpholine, N,N-dimethyl-N',N'-dimethyl isopropylpropylenediamine, N,N-diethyl-3-diethylamino- propylamine and dimethylbenzylamine. Exemplary organometallic catalysts include organomercury, organolead, organoferric, organobismuth and organotin catalysts, with no organometallic catalysts being preferred. A catalyst for the trimerization of isocyanates, resulting in a isocyanurate, such as an alkali metal alkoxide may also optionally be employed herein. The amount of amine catalysts can vary from 0.02 to 5 percent in the formulation or organometallic catalysts from 0.001 to 1 percent in the formulation can be used. Another option is the use of autocatalytic polyols, based on tertiary amine initiatiors, replacing the amine catalysts, hence reducing volatile organic compounds in the foam.

Additionally, it may be desirable to employ certain other ingredients in preparing polyurethane polymers. Among these additional ingredients are emulsifiers, silicone surfactants, preservatives, flame retardants, colorants, antioxidants, reinforcing agents, UV stabilizers, etc..

The foam may be formed by the so-called prepolymer method, in which a stoichiometric excess of the polyisocyanate is first reacted with the high equivalent weight polyol(s) to form a prepolymer, which is in a second step reacted with a chain extender and/or water to form the desired foam. Frothing methods may also be suitable. So-called one-shot methods, may also be used. In such one-shot methods, the polyisocyanate and all isocyanate-reactive components are simultaneously brought together and caused to react. Three widely used one-shot methods which are suitable for use herein include slabstock foam processes, high resiliency slabstock foam processes, and molded foam methods.

Slabstock foam may be prepared by mixing the foam ingredients and dispensing them into a trough or other region where the reaction mixture reacts, rises freely against the atmosphere (sometimes under a film or other flexible covering) and cures. In common commercial scale slabstock foam production, the foam ingredients (or various mixtures thereof) are pumped independently to a mixing head where they are mixed and dispensed onto a conveyor that is lined with paper or plastic. Foaming and curing occurs on the conveyor to form a foam bun. The resulting foams are typically from about from about 10 kg/m³ to 80 kg/m³, especially from about 15 kg/m³ to 60 kg/m³, preferably from about 17 kg/m³ to 50 kg/m³ in density.

Slabstock foam formulation may contain from about 0.5 to about 6, preferably about 1 to about 5 parts by weight water per 100 parts by weight of polyol at atmospheric pressure. At reduced pressure or at high altitudes, these levels are reduced. High resilience slabstock (HR slabstock) foam may be made in methods similar to those used to make conventional slabstock foam but using higher equivalent weight polyols. HR slabstock foams are characterized in exhibiting a Ball rebound score of 45% or higher, per ASTM 3574.03. Water levels tend to be from about 1 to about 6, especially from about 2 to about 4 parts per 100 parts by weight of polyols.

Molded foam can be made according to the invention by transferring the reactants (polyol composition including copolyester, polyisocyanate, blowing agent, and surfactant) to a closed mold, made of steel, aluminum or epoxy resin, where the foaming reaction takes place to produce a shaped foam. Either a so-called "cold-molding" process, in which the mold is not preheated significantly above ambient temperatures, or a "hot-molding" process, in which the mold is heated to drive the cure, can be used. Cold-molding processes are preferred to produce high resilience molded foam. Densities for molded foams generally range from 30 to 70 kg/m³.

### EXAMPLES

The following examples are provided to illustrate the embodiments of the invention, but are not intended to limit the scope thereof. All parts and percentages are by weight unless otherwise indicated.

The following materials are used:

| | |
|---|---|
| VORANOL* CP-4702 | A glycerine initiated polyoxypropylene polyol having a polyoxyethylene cap, a hydroxyl number in the range of 33-38, an average molecular weight of 4,700, and a viscosity at 25 °C of 820 cps. Available from The Dow Chemical Company. |
| VORANOL* CP 4735 | A glycerine initiated polyoxypropylene polyol having a polyoxyethylene cap, a hydroxyl number in the range of 33 to 38, average molecular weight of 4,700; and a viscosity at 25 °C of 820 cps, available from The Dow Chemical Company. |
| Triethanolamine | 99% pure triethanolamine available from ALDRICH. |
| Diethanolamine 85% | 85% diethanolamine, 15% water, available from The Dow Chemical Company |
| VORANATE* T-80 | A toluene diisocyanate (80% 2,4-toluene diisocyanate and 20% 2,6-toluene diisocyanate by weight) composition available from The Dow Chemical Company. |
| DABCO 33-LV: | A 33% solution of triethylenediamine in propylene glycol available from Air Products & Chemicals Inc. |
| KOSMOS 54 | A zinc ricinoleate catalyst available from Evonik Industries. |
| KOSMOS 29 | A stannous octoate catalyst available from Evonik Industries. |
| METATIN 1230 | A dimethyltin catalyst available from Acima Specialty Chemicals. |
| ZINC OCTOATE | A Zinc based catalyst available from Acima Specialty Chemicals |
| DABCO MB 20 | A Bismuth neodecanoate catalyst available from Air Products & Chemicals Inc. |
| NIAX A-1 | A 70% bis(2dimethyl aminoethyl)ether and 30% dipropylene glycol catalyst available from Momentive Performance Materials. |
| ORTEGOL 204 | A block stabilizer available from Evonik Industries. |
| TEGOSTAB B8783LF | A low fogging, silicone-based surfactant available from Evonik Industries. |
| ANTIBLAZE TMCP | A phosphorus flame retardant from Albemarle. |
| Seed A | A 10% solids PIPA polyol based on 90 parts of Voranol CP 4735 as the carrier polyol, 4.7 parts of triethanolamine reacted with 5.3 parts of VORANATE T-80 using 0.02 parts of METATIN 1230 as the catalyst. Seed A has a viscosity of 2,500 mPa.s at 25°C and an OH number of 49.7mg KOH/g. All PIPA particles are below 5 µm in size. |
| Seed B | A 15% PIPA solid polyol based on 85 parts of Voranol CP 4735 as the carrier polyol, 7.0 parts of triethanolamine reacted with 8.0 parts of VORANATE T-80 in presence of 0.2 parts of KOSMOS 54 as the catalyst. Seed B is also reported as Comparative Example 3 below. All particles are below 5 µm in size. |
| Seed C | A grafted polyether polyol containing 40% copolymerized styrene and acrylonitrile (SAN). Available from The Dow Chemical Company as SPECFLEX* NC 700. The SAN particles, acting as seed, are not reactive with isocyanate. All particles are below 5 µm in size. |
| Seed D | A polyether-based polyurea dispersion (PHD polyol) containing 20% solids, available from Bayer as DESMOPHEN 7619 |

| | |
|---|---|
| * VORANATE and VORANOL are trademarks of The Dow Chemical Company. | |

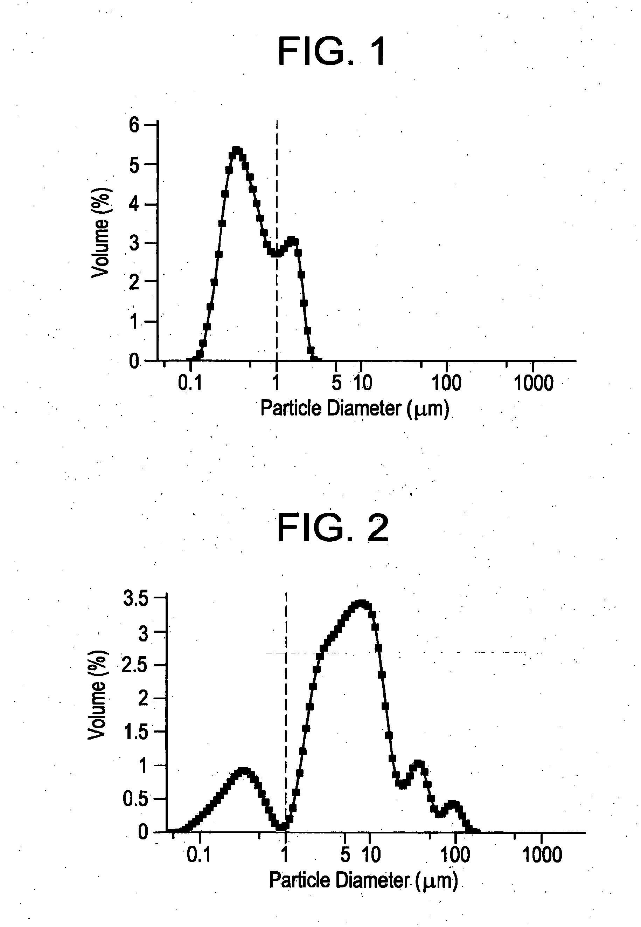

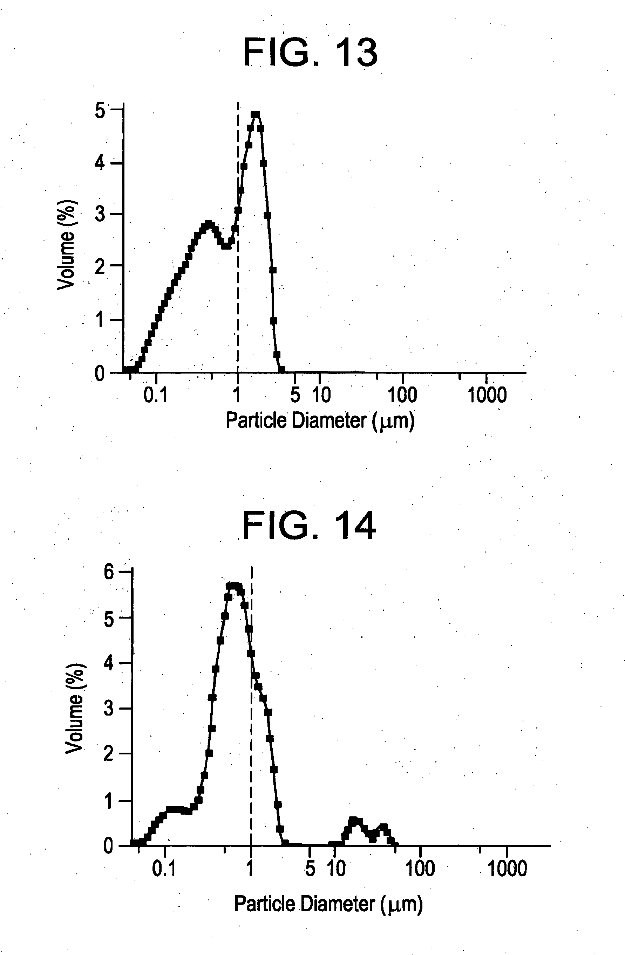

All Polyol viscosities are measured using a cone and plate viscometer at 20 °C: Foam properties are measured after 3 days aging in a conditioned, laboratory according to ASTM 3574-95 test methods for density, resiliency, and compression sets. Particle size distributions are determined according to the test method described above using a Beckman-Coulter LS 230 laser instrument and the graphs obtained with this instrument are depicted in Figures 1-16.

Three different processes are used to produce PHD or PIPA polyol on the bench:

| | |
|---|---|
| Procedure A : | Co-reactant is added to the carrier polyol (containing the seed) and stirred for one minute, then the polyisocyanate is poured while stirring for 30 seconds, finally the catalyst is added and stirring is continued for another 90 seconds. |
| Procedure B : | Co-reactant is pre-blended with the metal salt catalyst, then it is added to the carrier polyol (containing the seed), stirred for one minute, finally the polyisocyanate is poured for 30 seconds, and mixing is continued for 90 seconds. |
| Procedure C : | Co-reactant is pre-blended with the metal salt catalyst, and added to the carrier polyol whereby an amine catalyst (and the seed) was already pre-blended, after stirring for one minute, the polyisocyanate is poured over 10 seconds and stirring is continued for another 120 seconds. |

### Example 1 and Comparative Example 1

Example 1 and Comparative Example 1 are using Procedure C made by pre-blending amine catalyst (DABCO 33 LV) and the PIPA seed in the carrier polyol (VORANOL CP 4702) and mixing for 1 minute, then adding the metal catalyst (KOSMOS 54) pre-blended with triethanolamine and mixing for 1 minute. The polyisocyanate (VORANATE T-80) is then added over 10 seconds under strong stirring to disperse the particles in formation and prevent their coalescence. Stirring is stopped after an additional 2 minutes. The isocyanate index reported in Table 1 below is calculated from two hydroxyls of TEOA, considering that the third one is unlikely to react with the polyisocyanate and also does not account for any hydroxyls from the carrier polyol. Hence, the PIPA particles will contain free OH groups, hence the high values of OH numbers reported below, considering the carrier polyol has a OH number of 35. It is well understood that the lower the OH number of the final PIPA polyol, at equivalent product viscosity, the more complete has been the polymerization reaction. These OH numbers reported below were measured by titration with Phthalic Anhydride solution in pyridine.

**Table 1**

| | Comparative Example 1 | Example 1 |
|---|---|---|
| VORANOL CP 4702 | 80 | 78 |
| Triethanolamine | 9.38 | 9.38 |
| Seed A | | 2.0 |
| DABCO 33LV | 0.10 | 0.10 |
| KOSMOS 54 | 0.20 | 0.20 |
| VORANATE t-80 | 10.64 | 10.64 |
| Isocyanate Index | 97 | 97 |
| Solids content (%) | 20 | 20 |
| Viscosity (mPa.s) | 5290 | 4621 |
| OH value | 70.9 | 70.8 |
| Maximum particle size (µm) | 120 | 3 |

As can be seen in Figures 1 and 2, the reduction of particle size and better distribution of PIPA particles in Example 1 (Figure 1) is clear when comparing with Comparative Example 1 (Figure 2) produced without the PIPA seed. Furthermore, Example 1 does not contain undesirable, large particles (over 20 µm) which will settle in the PIPA polyol over time. Viscosities are remarkably low for 20% solids PIPA polyols, the seeded product having the lowest viscosity.

### Example 2 and Comparative Example 2

Example 2 and Comparative Example 2 are made following Procedure B without the use of amine catalyst (DABCO 33 LV).

**Table 2**

| | Comparative Example 2 | Example 2 |
|---|---|---|
| VORANOL CP 4702 | 80 | 78 |
| Triethanolamine | 9.38 | 9.38 |
| Seed A | | 2.0 |
| KOSMOS 54 | 0.10 | 0.10 |
| VORANATE T-80 | 10.64 | 10.64 |
| Isocyanate Index | 97 | 97 |
| Solids content (%) | 20 | 20 |
| Viscosity (mPa.s) | 4954 | 4020 |
| OH value | 65.0 | 65.7 |
| Maximum particle size (µm) | 95 | 15 |

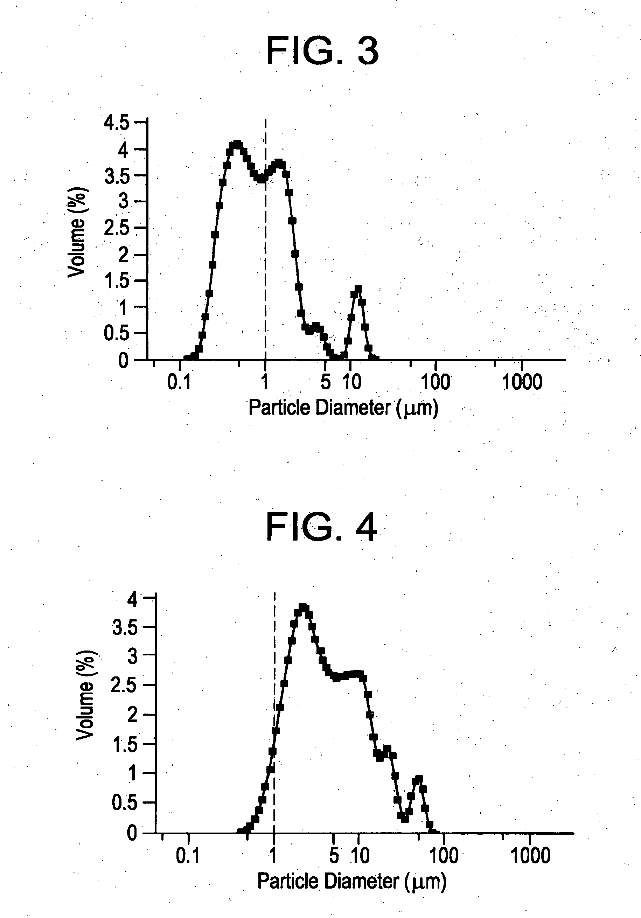

As can be seen in Figures 3 and 4, the reduction of particle size and better distribution in Example 2 (Figure 3) is clear when comparing with Comparative Example 2 (Figure 4) produced without the PIPA seed. Furthermore, Example 1 does not contain undesirable, large particles (over 20 µm) which will settle in the PIPA polyol over time.

### Examples 3 and 4 and Comparative Examples 3 and 4

PIPA polyol formulations are made using a continuous process in a POLYMECH high pressure mixing-head designed to produce polyurethane foam. The following streams are used: VORANOL 4735; triethanolamine and KOSMOS 54; 50/50 blend of Seed A and VORANOL CP 4735 (for Examples 3 and 4); and VORANATE T-80. Total outputs are -20 kg/minute for all runs. Table 3 gives the parts by weight used of each component. The isocyanate index is again calculated based on only two hydroxyls for TEOA.

**Table 3**

| | Comparative Example 3 | Example 3 | Comparative Example 4 | Example 4 |
|---|---|---|---|---|
| VORANOL 4735 | 85 | 83 | 85 | 83 |
| Triethanolamine | 7.04 | 7.04 | 7.04 | 7.04 |
| Seed A | | 2.0 | | 2.0 |
| KOSMOS 54 | 0.20 | 0.20 | 0.20 | 0.20 |
| VORANATE T-80 | 7.98 | 7.98 | 8.64 | 8.64 |
| Isocyanate Index | 97 | 97 | 105 | 105 |
| Solids content (%) | 15.0 | 15.0 | 15.7 | 15.7 |
| Viscosity (mPa.s) | 2397 | 2630 | 2816 | 2829 |
| OH value | 57.3 | 57.4 | 52.5 | 53.4 |
| Maximum particle size (µm) | 5 | 3 | 3 | 2 |

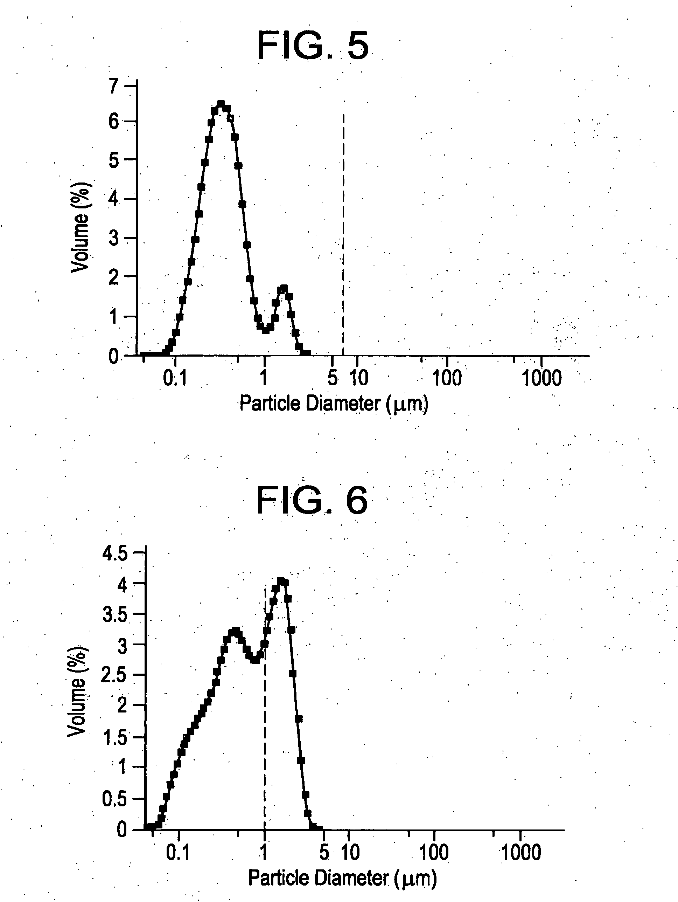

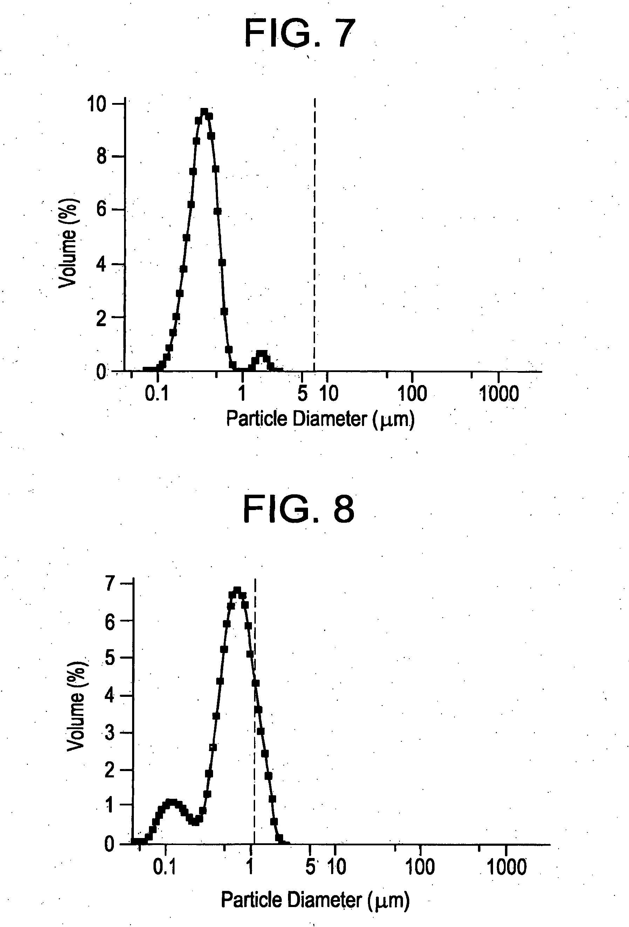

As can be seen in Figures 5-8, the Addition of a small amount of seed (2% PIPA polyol, Examples 3 and 4, Figures 5 and 7) in the carrier polyol (Voranol 4735) stabilizes the triethanolamine droplets resulting in finer particle size and shifting the particle size distribution to the left (small particles) at both isocyanate indexes (97 and 105) as compared to Comparative Examples 3 and 4, Figures 6 and 8).

The PIPA formulations of Examples 3 and 4 and Comparative Examples 3 and 4 are used in a formulation to produce box foams. on the bench, using standard hand-mix procedures. Polyols, water, catalysts, and surfactants are blended for 30 seconds at 2,500 rpm. Then VORANATE T-80 is added and mixed at 2,500 RPM for 5 seconds. The reactants are poured in a 20 cm x 20 cm x 20 cm cardboard mould and cured in an oven at 120°C for 5 minutes. PIPA polyols refer to the PIPA polyols of Table 3.

**Table 4**

| | Comparative Example 3 | Example 3 | Comparative Example 4 | Example 4 |
|---|---|---|---|---|
| PIPA polyol | 85 | 85 | 85 | 85 |
| VORANOL CP 4735 | 15 | 15 | 15 | 15 |
| ANTIBLAZE TMCP | 12 | 12 | 12 | 12 |
| NIAX A-1 | 0.03 | 0.03 | 0.03 | 0.03 |
| DDABCO 33LV | 0.15 | 0.15 | 0.15 | 0.15 |
| Diethanolamine (85%) | 1.2 | 1.2 | 1.2 | 1.2 |
| ORTEGOL 204 | 1.0 | 1.0 | 1.0 | 1.0 |
| TEGOSTAB B8783LF2 | 0.4 | 0.4 | 0.4 | 0.4 |
| KOSMOS 29 | 0.14 | 0.14 | 0.14 | 0.14 |
| KOSMOS 54 | 0.5 | 0.5 | 0.5 | 0.5 |
| Water | 2.1 | 2.1 | 2.1 | 2.1 |
| VORANATE T-80 index | 115 | 115 | 115 | 115 |
| Foam density (kg/m³) | 35.5 | 35.4 | 35.7 | 36.1 |
| Resiliency (%) | 54.5 | 56.5 | 54.8 | 56.5 |
| 40% CFD (kPa) | 3.5 | 3.3 | 3.6 | 3.4 |
| 50% CFD (kPa) | 4.3 | 4.0 | 4.5 | 4.2 |
| 90% CS | 8.5 | 5.5 | 8.4 | 6.5 |
| Wet CS (%) | 11.2 | 8.1 | 10.7 | 8.9 |

It can be seen that improved foam properties (higher resilency and lower compression set) are obtained using seeded PIPA, most likely because of smaller PIPA particles in the polyol, provide their better dispersion in the PU polymer matrix.

### Example 5 and Comparative Example 5

Example 5 and Comparative Example 5 are made in the same manner as for Examples 3 and 4 and Comparative Examples 3 and 4 but formulated to produce 20% solid particles, and the total outputs is -20 kg/minute for both runs.

**Table 5**

| | Comparative Example 5 | Example 5 |
|---|---|---|
| VORANOL 4735 | 80 | 78 |
| Triethanolamine | 9.38 | 9.38 |
| Kosmos 54 | 0.10 | 0.20 |
| Seed A | | 2.0 |
| VORANATE T-80 | 10.64 | 10.64 |
| Isocyanate Index | 97 | 97 |
| % PIPA Solids (%) | 20 | 20 |
| Viscosity (mPa.s) | 4,170 | 3,007 |
| OH value | 72.5 | 63.8 |
| Maximum particle size (µm) | 150 | 4 |

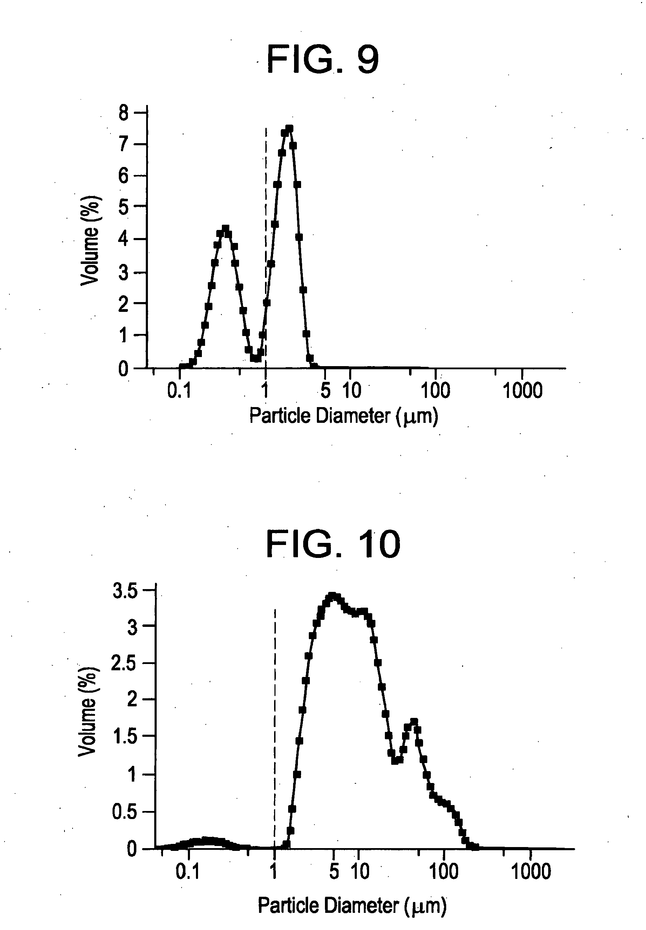

As seen in Figures 9 and 10, the Addition of a small amount of seed A (2% PIPA polyol, Example 5, Figure 9) in the carrier polyol (Voranol 4735) stabilizes the triethanolamine droplets resulting in finer particle size and shifting the particle size distribution to the left (small particles) as compared to Comparative Example 5, Figure 10). OH value is also lowered, confirming a better reaction profile.

### Examples 6-9

Examples 6-9 are made in the same manner as for Examples 3 and 4 and Comparative Examples 3 and 4 but using Styrene-Acrylonitrile seed from SPECFLEX NC 700 (Seed C) instead of PIPA seed.

**Table 6**

| | Example 6 | Example 7 | Example 8 | Example 9 |
|---|---|---|---|---|
| VORANOL 4735 | 81 | 81 | 81 | 81 |
| Triethanolamine | 7.04 | 7.04 | 7.04 | 7.04 |
| KOSMOS 54 | 0.2 | 0.2 | 0.2 | 0.2 |
| Seed C/ VORANOL 4735 | 0.35/3.65 | 0.35/3.65 | 2/2 | 2/2 |
| VORANATE T-80 | 7.98 | 8.65 | 7.98 | 8.64 |
| Isocyanate Index | 97 | 105 | 97 | 105 |
| % Solids (%) | 15 | 15 | 15 | 15 |
| Viscosity (mPa.s) | 2322 | 2673 | 2473 | 2847 |
| OH value | 55.8 | 54.7 | 58.7 | 52.9 |

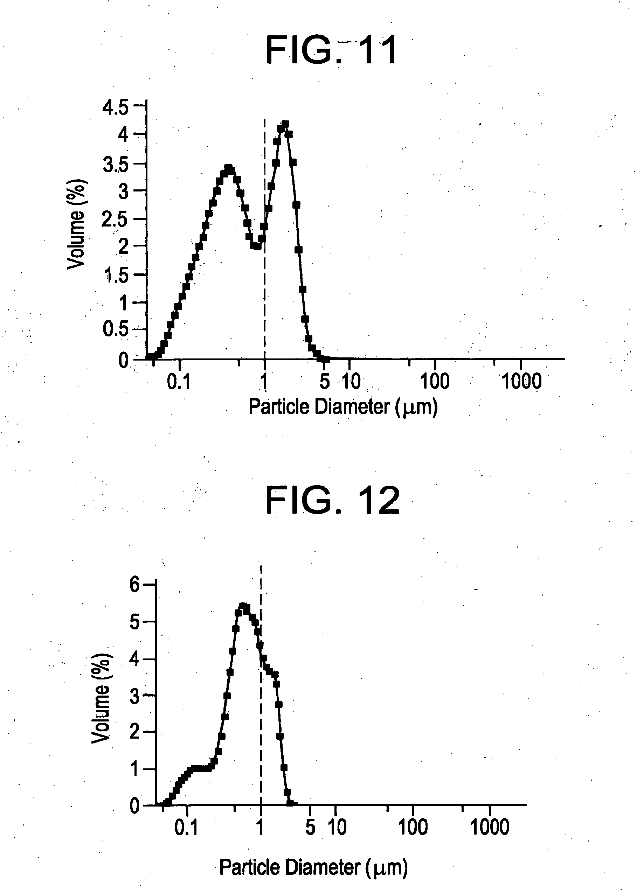

A reduction of particle size distribution is obtained for PIPA polyol using SAN seeds as with the PIPA seeds, albeit to a smaller extent. The particle size distributions of Examples 6-9 (Figures 11-14) may be compared with Comparative Examples 3 and 4 which were carried out with a similar recipe but without seeding. The data with SPECFLEX NC 700 as a seed show that better results are obtained with a low amount (0.35%) than with a higher amount (2 %). The PIPA polyols of Examples 6-9 are 100% Tin-free.

### Comparative Examples 6 & 7

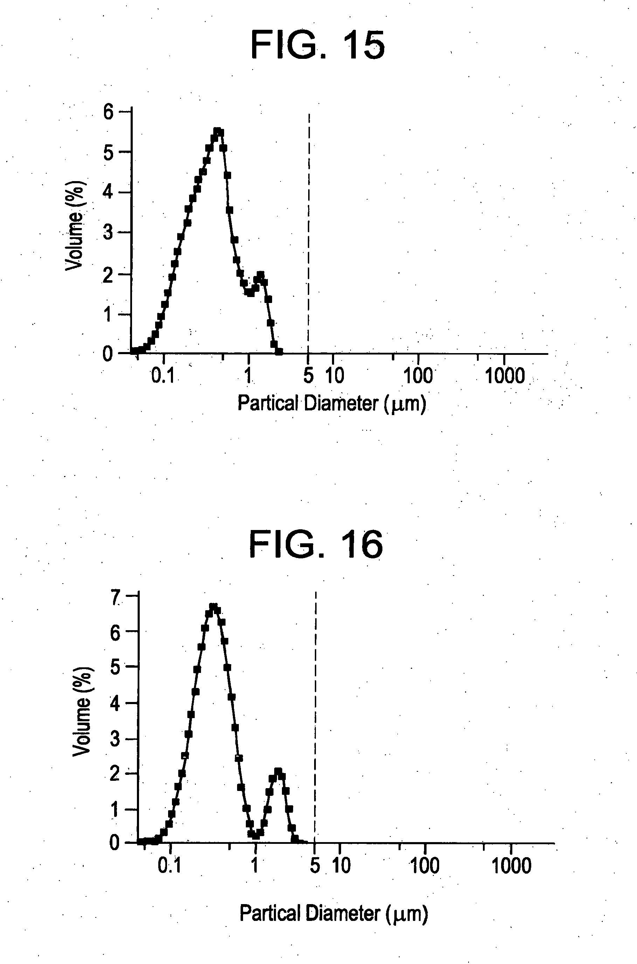

Comparative Examples 6 and 7 are aimed at comparing the effect of seeds when a strong tin-based catalyst, such as METATIN 1230, is used to produce PIPA polyols. Both polyols are produced continuously using the mix-head of a foaming machine as in Examples 3 and 4, but with total outputs ∼20 kg/min for Comparative Examples 6 and 7 respectively. When using organotin based catalysts such as DBTDL or Metatin 1230, the advantage of using a seeding technology is almost non-existent because the PIPA quality is already very good without seeds. Indeed for both PIPA's particle sizes are lower than 5 µm, as can be seen in Figure 15 (no seed) and Figure 16 (PIPA seed). Furthermore, the particle distribution of unseeded PIPA polyol (see Figure 15) is similar to the tin-free, seeded PIPA of Example 3 (see Figure 5).

**Table 7**

| | Comparative Example 6 | Comparative Example 7 |
|---|---|---|
| VORANOL CP 4735 | 85 | 83 |
| Triethanolamine | 7.04 | 7.04 |
| Seed A | | 2.0 |
| METATIN 1230 | 0.02 | 0.02 |
| VORANATE T-80 | 8 | 8 |
| Isocyanate Index | 97 | 97 |
| Solids content (%) | 15 | 15 |
| Viscosity (mPa.s) | 4290 | 4824 |
| OH value | 56.0 | 69.4 |

### Examples 10 and 11

In examples 10 and 11 two 20% solids PIPA tin-free polyols are produced on the bench using Procedure A, and seed B and seed D respectively. KOSMOS 54 is pre-blended at 10% in VORANOL CP 4702.

**Table 8**

| | Example 10 | Example 11 |
|---|---|---|
| VORANOL CP 4702 | 80 | 80 |
| Triethanolamine | 9.4 | 9.4 |
| KOSMOS 54 | 0.2 | 0.2 |
| Seed B | 3.0 | |
| Seed D | | 1.0 |
| Voranate T-80 | 10.6 | 10.6 |
| Viscosity mPa.s | 6,085 | 5,502 |

### Examples 12 and 13 and Comparative Example 8

Examples 12 and 13, (both tin-free 20% solids PIPA polyols) are produced on the bench using Procdure B and seed A, and, as catalysts, Dabco MB 20 and Zinc Octoate respectively. In both cases, the catalysts are pre-blended with triethanolamine. Comparative example 8 is based on the same recipe as example 12 but without the seed A. Comparative example 8 gives a gel, hence viscosity cannot be measured.

**Table 9**

| | Example 12 | Comparative Example 8 | Example 13 |
|---|---|---|---|
| VORANOL CP 4702 | 80 | 80 | 80 |
| Triethanolamine | 9.4 | 9.4 | 9.4 |
| DABCO MB 20 | 0.1 | 0.1 | |
| Zinc Octoate | | | 0.05 |
| Seed A | 2 | | 2 |
| Voranate T-80 | 10.6 | 10.6 | 10.6 |
| Viscosity | 17,562 | Gel | 3,558 |

While the foregoing is directed to embodiments of the present invention, other and further embodiments of the invention may be devised without departing from the basic scope thereof, and the scope thereof is determined by the claims that follow.

## Claims

1. A method of producing a polymer polyol dispersion, the method comprising:
providing at least one reaction system, the reaction system comprising:
a) at least one polyol;
b) at least one seed population;
c) at least one catalyst;
d) at least one of a co-reactant having an equivalent weight of up to 400 and at least one active hydrogen attached to a nitrogen or oxygen atom; and
e) at least one polyisocyanate;
wherein the at least one seed population comprises less than 5% by weight of the at least one polyol and comprises suspended seed particles having maximum particle diameters of less than 5 µm;
wherein the at least one reaction mixture reacts to form at least one of a polyurea, polyurethane, and polyurethane-urea particle population in the at least one polyol without the addition of any catalysts comprising tin; and
wherein the polymer polyol dispersion has a solids content of at least 15% of the weight of the polymer polyol dispersion.

2. A polymer polyol dispersion comprising a reaction product of a reaction system, the reaction system comprising:
a) at least one polyol;
b) at least one seed population;
c) at least one catalyst;
d) at least one of a co-reactant having an equivalent weight of up to 400 and at least one active hydrogen attached to a nitrogen or oxygen atom; and
e) at least one polyisocyanate;
wherein the at least one seed population comprises less than 5% by weight of the at least one polyol and comprises suspended seed particles having maximum diameters of less than 5 µm;
wherein the at least one reaction mixture reacts to form at least one of a polyurea, polyurethane, and polyurethane-urea particle population in the at least one polyol without the addition of any catalysts comprising tin; and
wherein the polymer polyol dispersion has a solids content of at least 15% of the weight of the polymer polyol dispersion.

3. The method of claim 1 or the polymer polyol dispersion of claim 2, wherein the at least one seed population comprises particles of at least one of polyurea particles, polyurethane, polyurethane-urea, polyisocyanate polyaddition particle, which contain reactive hydrogens, able to react with the polyisocyanate during the formation of polyurea, polyurethane or polyurethane-urea particles.

4. The method or the polymer polyol dispersion of any one of claims 1-3, wherein at least 90% by weight of the particles of the at least one of a polyurea, polyurethane and polyurethane-urea particle population have a diameter of less than 10 µm.

5. The method or the polymer polyol dispersion of any one of claims 1-4, wherein at least 90% by weight of the particles of the at least one of a polyurea, polyurethane, and polyurethane-urea particle population have a diameter of less than 5 µm.

6. The method or the polymer polyol dispersion of any one of claims 1-5, wherein the polymer polyol has a particle concentration of at least 20 weight% based on the weight of the polymer polyol.

7. The method or the polymer polyol dispersion of any one of claims 1-6, wherein the polymer polyol is fully devoid of a catalyst comprising tin.

8. The method or the polymer polyol dispersion of any one of claims 1-7, wherein the at least one reaction mixture reacts to form at least one of a polyurea, polyurethane, and polyurethane-urea particle population in the presence of at least one of a tin free metal catalyst, a tertiary amine catalyst, or a combination of the tin free metal catalyst and the tertiary amine catalyst.

9. The method or the polymer polyol dispersion of claim 8, wherein the at least one co-reactant is blended with the tin free metal catalyst before being combined with the at least one reaction mixture.

10. The method or the polymer polyol dispersion of any one of claims 7-9, wherein the at least one polyol is blended with the tertiary amine catalyst before being combined with the at least one reaction mixture.

11. The method or the polymer polyol dispersion of any one of claims 7-10, wherein the tin free metal salt catalyst comprises one or more of a zinc, bismuth, zirconium, copper, chromium, nickel, iron and cobalt catalyst.

12. The method or the polymer polyol dispersion of any one of claims 7-11, wherein the tertiary amine catalyst is at least one of triethylenediamine, bis-(dimethylaminopropyl) methylamine, or a combination of both.

13. The method or the polymer polyol dispersion of any one of claims 1-12, wherein the polyurea, polyurethane, or polyurethane-urea particle formation is catalyzed by a combination of a tin-free metal catalyst and a tertiary amine catalyst selected from dimethylaminopropylamine and an amine initiated polyol.

14. The method or the polymer polyol dispersion of any one of claims 1-13, wherein the co-reactant comprises at least one of a primary or secondary amine or an alkanolamine.

15. A polyurethane foam comprising the reaction product of a reaction mixture, the reaction mixture comprising:
the polyol dispersion of any one of claims 1-14; and
at least one polyisocyanate.

## Patentansprüche

1. Ein Verfahren zum Herstellen einer Polymerpolyoldispersion, wobei das Verfahren Folgendes beinhaltet:
Bereitstellen mindestens eines Reaktionssystems, wobei das Reaktionssystem Folgendes beinhaltet:
a) mindestens ein Polyol;
b) mindestens eine Keimkristallpopulation;
c) mindestens einen Katalysator;
d) mindestens eines von einem Reaktionspartner mit einem Äquivalentgewicht von bis zu 400 und mindestens einem aktiven Wasserstoff, der an ein Stickstoff- oder Sauerstoffatom gebunden ist; und
e) mindestens ein Polyisocyanat;
wobei die mindestens eine Keimkristallpopulation weniger als 5 Gew.-% des mindestens einen Polyols ausmacht und suspendierte Keimkristallpartikel mit einem maximalen Partikeldurchmesser von weniger als 5 µm beinhaltet;
wobei das mindestens eine Reaktionsgemisch eine Reaktion eingeht, um mindestens eine von einer Polyharnstoff-, Polyurethan- und Polyurethanharnstoffpartikelpopulation in dem mindestens einen Polyol zu bilden, ohne dass jegliche Zinn beinhaltende Katalysatoren zugegeben werden; und
wobei die Polymerpolyoldispersion einen Feststoffgehalt von mindestens 15 Gew.-% der Polymerpolyoldispersion aufweist.

2. Eine Polymerpolyoldispersion, die ein Reaktionsprodukt eines Reaktionssystems beinhaltet, wobei das Reaktionssystem Folgendes beinhaltet:
a) mindestens ein Polyol;
b) mindestens eine Keimkristallpopulation;
c) mindestens einen Katalysator;
d) mindestens eines von einem Reaktionspartner mit einem Äquivalentgewicht von bis zu 400 und mindestens einem aktiven Wasserstoff, der an ein Stickstoff- oder Sauerstoffatom gebunden ist; und
e) mindestens ein Polyisocyanat;
wobei die mindestens eine Keimkristallpopulation weniger als 5 Gew.-% des mindestens einen Polyols ausmacht und suspendierte Keimkristallpartikel mit einem maximalen Durchmesser von weniger als 5 µm beinhaltet;
wobei das mindestens eine Reaktionsgemisch eine Reaktion eingeht, um mindestens eine von einer Polyharnstoff-, Polyurethan- und Polyurethanharnstoffpartikelpopulation in dem mindestens einen Polyol zu bilden, ohne dass jegliche Zinn beinhaltende Katalysatoren zugegeben werden; und
wobei die Polymerpolyoldispersion einen Feststoffgehalt von mindestens 15 Gew.-% der Polymerpolyoldispersion aufweist.

3. Verfahren gemäß Anspruch 1 oder Polymerpolyoldispersion gemäß Anspruch 2, wobei die mindestens eine Keimkristallpopulation Partikel von mindestens einem von Polyharnstoffpartikeln, Polyurethan, Polyurethanharnstoff, Polyisocyanat-Polyadditionspartikeln, die reaktive Wasserstoffe enthalten, welche während der Bildung von Polyharnstoff-, Polyurethan- oder Polyurethanharnstoffpartikeln mit dem Polyisocyanat reagieren können, beinhaltet.

4. Verfahren oder Polymerpolyoldispersion gemäß einem der Ansprüche 1-3, wobei mindestens 90 Gew.-% der Partikel von mindestens einer von einer Polyharnstoff-, Polyurethan- und Polyurethanharnstoffpartikelpopulation einen Durchmesser von weniger als 10 µm aufweisen.

5. Verfahren oder Polymerpolyoldispersion gemäß einem der Ansprüche 1-4, wobei mindestens 90 Gew.-% der Partikel von mindestens einer von einer Polyharnstoff-, Polyurethan- und Polyurethanharnstoffpartikelpopulation einen Durchmesser von weniger als 5 µm aufweisen.

6. Verfahren oder Polymerpolyoldispersion gemäß einem der Ansprüche 1-5, wobei das Polymerpolyol eine Partikelkonzentration von mindestens 20 Gew.-%, bezogen auf das Gewicht des Polymerpolyols, aufweist.

7. Verfahren oder Polymerpolyoldispersion gemäß einem der Ansprüche 1-6, wobei das Polymerpolyol vollkommen frei von einem Zinn beinhaltenden Katalysator ist.

8. Verfahren oder Polymerpolyoldispersion gemäß einem der Ansprüche 1-7, wobei das mindestens eine Reaktionsgemisch eine Reaktion eingeht, um mindestens eine von einer Polyharnstoff-, Polyurethan- und Polyurethanharnstoffpartikelpopulation in Gegenwart mindestens eines zinnfreien Metallkatalysators, eines tertiären Aminkatalysators oder einer Kombination aus dem zinnfreien Metallkatalysator und dem tertiären Aminkatalysator zu bilden.

9. Verfahren oder Polymerpolyoldispersion gemäß Anspruch 8, wobei der mindestens eine Reaktionspartner vor dem Kombinieren mit dem mindestens einen Reaktionsgemisch mit dem zinnfreien Metallkatalysator vermischt wird.

10. Verfahren oder Polymerpolyoldispersion gemäß einem der Ansprüche 7-9, wobei das mindestens eine Polyol mit dem tertiären Aminkatalysator vor dem Kombinieren mit dem mindestens einen Reaktionsgemisch vermischt wird

11. Verfahren oder Polymerpolyoldispersion gemäß einem der Ansprüche 7-10, wobei der zinnfreie Metallsalzkatalysator einen oder mehrere von einem Zink-, Bismut-, Zirkonium-, Kupfer-, Chrom-, Nickel-, Eisen- und Kobaltkatalysator beinhaltet.

12. Verfahren oder Polymerpolyoldispersion gemäß einem der Ansprüche 7-11, wobei der tertiäre Aminkatalysator mindestens eines von Triethylendiamin, Bis-(dimethylaminopropyl)methylamin oder eine Kombination aus beiden ist.

13. Verfahren oder Polymerpolyoldispersion gemäß einem der Ansprüche 1-12, wobei die Polyharnstoff-, Polyurethan- oder Polyurethanharnstoffpartikelbildung durch eine Kombination aus einem zinnfreien Metallkatalysator und einem tertiären Aminkatalysator, ausgewählt aus Dimethylaminopropylamin und einem amininitiierten Polyol, katalysiert wird.

14. Verfahren oder Polymerpolyoldispersion gemäß einem der Ansprüche 1-13, wobei der Reaktionspartner mindestens eines von einem primären oder sekundären Amin oder einem Alkanolamin beinhaltet.

15. Ein Polyurethanschaumstoff, beinhaltend das Reaktionsprodukt eines Reaktionsgemisches, wobei das Reaktionsgemisch Folgendes beinhaltet:
die Polyoldispersion gemäß einem der Ansprüche 1-14; und
mindestens ein Polyisocyanat.

## Revendications

1. Une méthode pour produire une dispersion de polyol de polymère, la méthode comprenant :
le fait de fournir au moins un système de réaction, le système de réaction comprenant :
a) au moins un polyol ;
b) au moins une population de semences ;
c) au moins un catalyseur ;
d) au moins un élément parmi un coréactif ayant un poids équivalent allant jusqu'à 400 et au moins un hydrogène actif attaché à un atome d'azote ou d'oxygène ; et
e) au moins un polyisocyanate ;
dans laquelle l'au moins une population de semences comprend moins de 5 % en poids de l'au moins un polyol et comprend des particules de semence en suspension ayant des diamètres de particule maximums de moins de 5 µm ;
dans laquelle l'au moins un mélange de réaction réagit pour former au moins une population de particules parmi une population de particules de polyurée, de polyuréthane, et de polyuréthane-urée dans l'au moins un polyol sans addition de catalyseurs comprenant de l'étain, quels qu'ils soient ; et
dans laquelle la dispersion de polyol de polymère a une teneur en solides d'au moins 15 % du poids de la dispersion de polyol de polymère.

2. Une dispersion de polyol de polymère comprenant un produit de réaction d'un système de réaction, le système de réaction comprenant :
a) au moins un polyol ;
b) au moins une population de semences ;
c) au moins un catalyseur ;
d) au moins un élément parmi un coréactif ayant un poids équivalent allant jusqu'à 400 et au moins un hydrogène actif attaché à un atome d'azote ou d'oxygène ; et
e) au moins un polyisocyanate ;
dans laquelle l'au moins une population de semences comprend moins de 5 % en poids de l'au moins un polyol et comprend des particules de semence en suspension ayant des diamètres maximums de moins de 5 µm ;
dans laquelle l'au moins un mélange de réaction réagit pour former au moins une population de particules parmi une population de particules de polyurée, de polyuréthane, et de polyuréthane-urée dans l'au moins un polyol sans addition de catalyseurs comprenant de l'étain, quels qu'ils soient ; et
dans laquelle la dispersion de polyol de polymère a une teneur en solides d'au moins 15 % du poids de la dispersion de polyol de polymère.

3. La méthode de la revendication 1 ou la dispersion de polyol de polymère de la revendication 2, dans laquelle l'au moins une population de semences comprend des particules d'au moins une particule parmi des particules de polyurée, de polyuréthane, de polyuréthane-urée, une particule de polyaddition de polyisocyanate, lesquelles contiennent des hydrogènes réactifs, à même de réagir avec le polyisocyanate durant la formation de particules de polyurée, de polyuréthane ou de polyuréthane-urée.

4. La méthode ou la dispersion de polyol de polymère de n'importe laquelle des revendications 1 à 3, dans laquelle au moins 90 % en poids des particules de l'au moins une population parmi une population de particules de polyurée, de polyuréthane et de polyuréthane-urée ont un diamètre de moins de 10 µm.

5. La méthode ou la dispersion de polyol de polymère de n'importe laquelle des revendications 1 à 4, dans laquelle au moins 90 % en poids des particules de l'au moins une population parmi une population de particules de polyurée, de polyuréthane et de polyuréthane-urée ont un diamètre de moins de 5 µm.

6. La méthode ou la dispersion de polyol de polymère de n'importe laquelle des revendications 1 à 5, dans laquelle le polyol de polymère a une concentration de particules d'au moins 20 % en poids rapporté au poids du polyol de polymère.

7. La méthode ou la dispersion de polyol de polymère de n'importe laquelle des revendications 1 à 6, dans laquelle le polyol de polymère est totalement dépourvu d'un catalyseur comprenant de l'étain.

8. La méthode ou la dispersion de polyol de polymère de n'importe laquelle des revendications 1 à 7, dans laquelle l'au moins un mélange de réaction réagit pour former au moins une population de particules parmi une population de particules de polyurée, de polyuréthane, et de polyuréthane-urée en présence d'au moins un élément parmi un catalyseur métallique sans étain, un catalyseurs amine tertiaire, ou une combinaison du catalyseur métallique sans étain et du catalyseur amine tertiaire.

9. La méthode ou la dispersion de polyol de polymère de la revendication 8, dans laquelle l'au moins un coréactif est mélangé de façon homogène avec le catalyseur métallique sans étain avant d'être combiné à l'au moins un mélange de réaction.

10. La méthode ou la dispersion de polyol de polymère de n'importe laquelle des revendications 7 à 9, dans laquelle l'au moins un polyol est mélangé de façon homogène avec le catalyseur amine tertiaire avant d'être combiné à l'au moins un mélange de réaction.

11. La méthode ou la dispersion de polyol de polymère de n'importe laquelle des revendications 7 à 10, dans laquelle le catalyseur sel métallique sans étain comprend un ou plusieurs catalyseurs parmi un catalyseur zinc, bismuth, zirconium, cuivre, chrome, nickel, fer et cobalt.

12. La méthode ou la dispersion de polyol de polymère de n'importe laquelle des revendications 7 à 11, dans laquelle le catalyseur amine tertiaire est au moins soit une triéthylènediamine, soit une bis-(diméthylaminopropyl)méthylamine, ou une combinaison des deux.

13. La méthode ou la dispersion de polyol de polymère de n'importe laquelle des revendications 1 à 12, dans laquelle la formation de particules de polyurée, de polyuréthane, ou de polyuréthane-urée est catalysée par une combinaison d'un catalyseur métallique sans étain et d'un catalyseur amine tertiaire sélectionné parmi une diméthylaminopropylamine et un polyol initié par une amine.

14. La méthode ou la dispersion de polyol de polymère de n'importe laquelle des revendications 1 à 13, dans laquelle le coréactif comprend au moins soit une amine primaire ou secondaire, soit une alcanolamine.

15. Une mousse de polyuréthane comprenant le produit de réaction d'un mélange de réaction, le mélange de réaction comprenant :
la dispersion de polyol de n'importe laquelle des revendications 1 à 14 ; et
au moins un polyisocyanate.
